# EUROPEAN PATENT SPECIFICATION

(11) **EP 2 242 242 B1**
(45) Date of publication and mention of the grant of the patent: **05.06.2013**
(21) Application number: 09701402.1
(22) Date of filing: 07.01.2009
(51) Int. Cl.: H04M 3/00, H04M 7/00, H04L 29/06, H04W 76/02, H04L 12/70

(54) **CALL CONTROL DEVICE, CALL CONTROL SYSTEM, CALL CONTROL METHOD, AND CALL CONTROL PROGRAM**
RUFSTEUERUNGSVORRICHTUNG, RUFSTEUERUNGSSYSTEM, RUFSTEUERUNGSVERFAHREN UND RUFSTEUERUNGSPROGRAMM
DISPOSITIF DE CONTRÔLE D'APPEL, SYSTÈME DE CONTRÔLE D'APPEL, PROCÉDÉ DE CONTRÔLE D'APPEL ET PROGRAMME DE CONTRÔLE D'APPEL

(30) Priority: 10.01.2008 JP 2008003071
(43) Date of publication of application: 20.10.2010
(73) Proprietor: NEC Corporation, Minato-ku Tokyo 108-8001 (JP)
(72) Inventor: YOSHIZAWA, Yojiro, Tokyo 108-8001 (JP); KOMURA, Hajime, Tokyo 108-0073 (JP)
(74) Representative: Vossius & Partner
(86) International application number: PCT/JP2009/050076
(87) International publication number: WO 2009/088014

(56) References cited:
- WO-A1-2007/096001
- WO-A1-2007/123341
- WO-A2-2007/089383
- GB-A- 2 438 291
- JP-A- 2003 060 682
- JP-A- 2007 082 100
- US-A1- 2006 253 538
- US-A1- 2006 256 748

## Description

### [Technical Field]

The present invention relates to a call control apparatus, a call control system, a call control method and a call control program and in particular, relates to a call control apparatus, a call control system, a call control method and a call control program which can change a communication path of signaling dynamically.

### [Background Art]

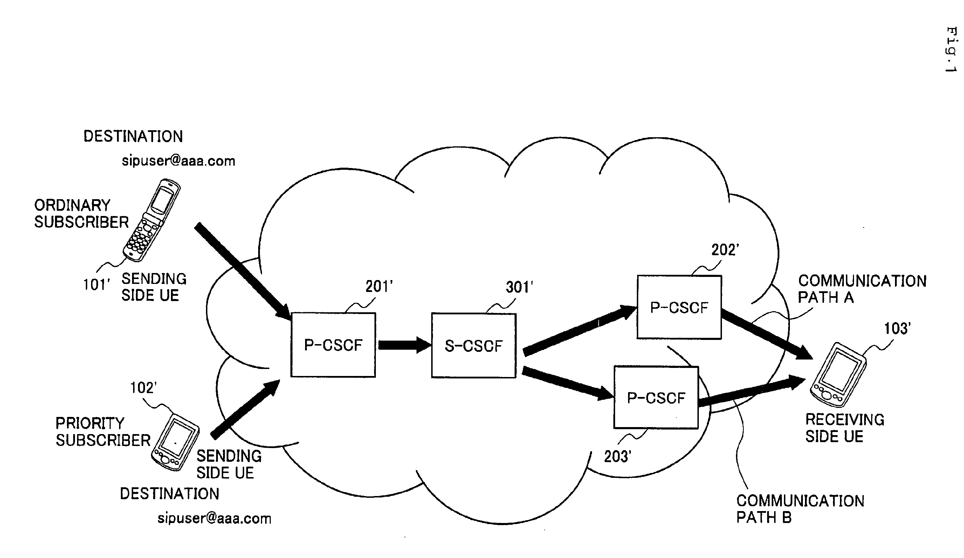

IMS (IP Multimedia Subsystem) is exemplified as technology which realizes NGN (NEXT Generation Network). A principal part of IMS is CSCF (Call Session Control Function). CSCF carries out session control and service control, which is carried out by use of AS (Application Server), based on SIP (Session Initiation Protocol). FIG. 1 shows a call control system which uses CSCF.

According to a call control system shown in FIG. 1, in the case that a sender UE (User Equipment) (101') starts communication with a receiver UE (103'), the sender UE (101') sends an INVITE signal to P-CSCF (Proxy Call Session Control Function) (201'). In the case that P-CSCF receives the INVITE signal, P-CSCF (201') sends the INVITE signal to S-CSCF (Serving Call Session Control Function) (301'). In the case that S-CSCF (301') receives the INVITE signal, S-CSCF (301') determines a communication path (for example, communication path A), which is connected with the receiver UE (103'), based on receiver information (for example, telephone number) included in the INVITE signal. Then, S-CSCF (301') sends the INVITE signal to the receiver UE (103') via P-CSCF (202') which exists on the determined communication path A. As a result, the sender UE (101') and the receiver UE (103') carry out signaling through the communication path A, and start communication each other.

Further, according to the call control system shown in FIG. 1 mentioned above, S-CSCF (301') sends the INVITE signal to the receiver UE (103') through always the same communication path (A) in the case the telephone number, which is included in the INVITE signal, of the receiver UE (103') is the same.

For example, in the case that the sender UE (101') which belongs to an ordinary subscriber, and the sender UE (102) which belongs to a priority subscriber send the INVITE signal to the same receiver UE (103'), S-CSCF (301') sends the INVITE signal to the receiver UE (103') through always the same communication path (A).

For this reason, according to the call control system shown in FIG. 1, it is impossible that the ordinary subscriber and the priority subscriber carry out signaling through different communication paths each other.

Moreover, according to the call control system shown in FIG. 1, although there are plural communication paths from sender UEs to receiver UE (103'), the communication paths are not used effectively, since the INVITE signal sent to the receiver UE (103') always through the same communication path (A).

For this reason, it is considered to be necessary that a system, which can change the communication path of signaling dynamically to aim at an effective use of the communication path, is developed. Moreover, it is considered to be necessary that a system, which can change the communication path dynamically based on information on the receiver UEs (101' and 102'), is developed.

Further, as a technical document applied before the present invention, there is a document which discloses technology to carry out routing an input call based on a service class attached to the input call (for example, refer to patent document 1).
[Patent document 1] Japanese Patent Laid-Open Application JP 7-170327 A

### [Description of the Invention]

### [Problem to be solved by the Invention]

However, the above-mentioned patent document 1 does not refer to routing of signaling, which uses SIP, at all and does not include any suggestion on necessity of routing of signaling at all.

The present invention is conceived from the point of view of the above-mentioned circumstances. An object of the present invention is to provide a call control apparatus, a call control system, a call control method and a call control program which can change a communication path of signaling dynamically in the case that signaling which uses SIP is carried out.

### [Means for solving the Problem]

The above object is achieved with the features of the claims.

### [Effect of the Invention]

According to the present invention, it is possible to change the communication path of signaling dynamically, in the case that signaling, which uses SIP, is carried out.

### [Exemplary Enbodiment]

### <An outline of a call control system according to an exemplary embodiment of the present invention>

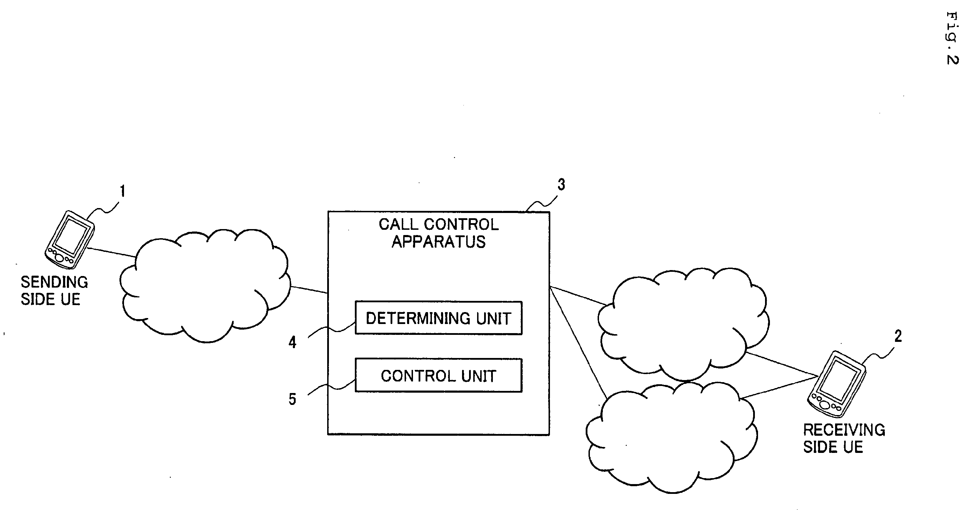

First, an outline of the call control system will be described with reference to FIG 2 according to an exemplary embodiment of the present invention.

A call control system includes, at least, a sender terminal(1), a receiver terminal (2) and a call control apparatus (3) which determines a communication path of signaling carried out between the sender terminal(1) and the receiver terminal(2), according to the exemplary embodiment of the present invention.

The call control apparatus (3) includes a determining unit (4) to determine the communication path corresponding to sender information which is included in an INVITE signal received from the sender terminal(1), and a control unit (5) to control carrying out signaling through the communication path which is determined by the determining unit (4).

As a result, it is possible to change the communication path of signaling dynamically, in the case that signaling using SIP, is carried out, according to the exemplary embodiment of the present invention. Hereinafter, the call control system will be described in detail with reference to an accompanying drawing.

### (A first exemplary embodiment of the present invention)

### <An exemplary system configuration of a call control system>

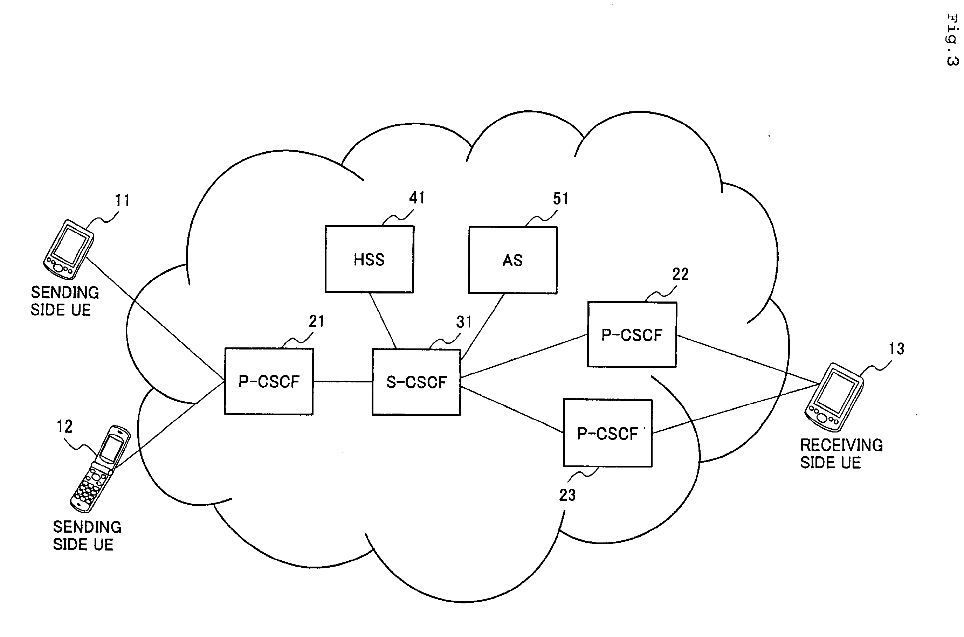

First, an exemplary system configuration of a call control system will be described with reference to FIG 3.

The call control system of the present examplary embodiment includes UEs (User Equipment) (11 to 13), P- CSCF (Proxy Call Session Control Function) (21 to 23), S-CSCF (Serving Call Session Control Function) (31), HSS (Home Subscriber Server) (41) and AS (Application Server) (51). The call control system controls session and service based on SIP (Session Initiation Protocol).

### <UEs: 11 to 13>

UEs (11 to 13) are communication apparatuses which communicates based on SIP. The call control system includes the sender UEs (11 to 12) and the receiver UE (13).

### <P-CSCFs:21 to 23>

P-CSCFs (21 to 23) repeat information between UEs (11 to 13) and S-CSCF (31) based on SIP.

### <S - CSCF: 31>

S-CSCF (31) controls session between UEs (11 to 13). In the case that S-CSCF (31) of the present examplary embodiment receives a SIP signal from the sender P-CSCF (21), S-CSCF (31) determines the receiver P-CSCF (22 or 23) based on information of the SIP signal and sends the SIP signal to the determined P-CSCF (22 or 23). Moreover, S-CSCF (31) acquires profile information from HSS (41) and controls session based on the acquired profile information. The profile information has a structure which includes information for identifying each of subscribers of UEs (11 to 13) uniquely or the like. Moreover, the profile information has a structure including information such as multimedia service information which a subscriber desires. In this case, S-CSCF (31) transfers the SIP signal to AS (51) based on the information such as the multimedia service information and makes AS (51) activated and controls so as to provide various kinds of services corresponding to each subscriber.

### <HSS: 41>

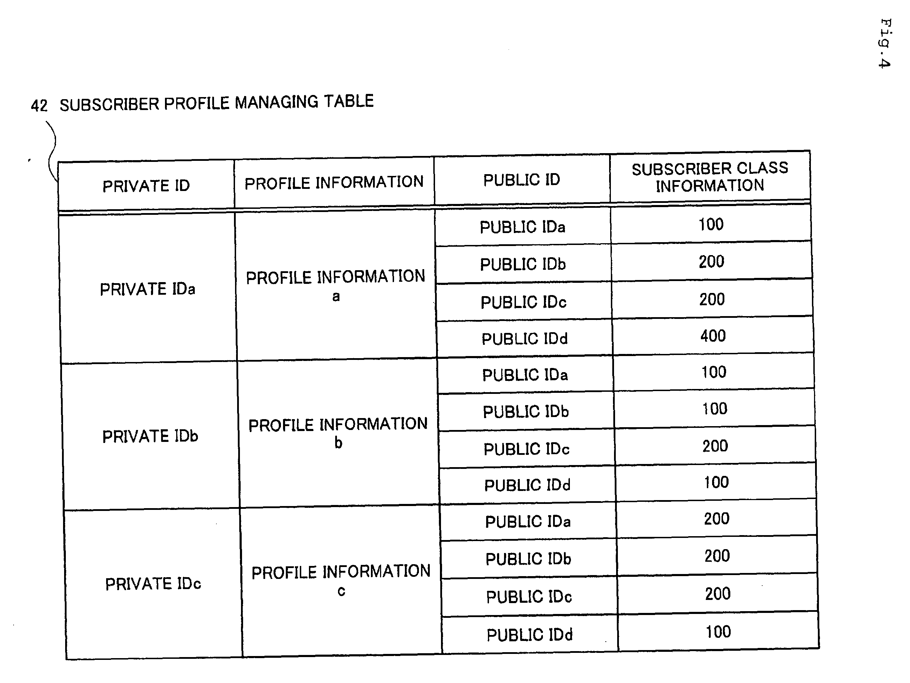

HSS (41) manages profile information which is used in IMS. HSS (41) of the present examplary embodiment includes a subscriber profile managing table (42) shown in FIG. 4. As shown in FIG. 4, the subscriber profile managing table (42) manages profile information and subscriber class information, which are associated each other, per private ID. The subscriber class information is for identifying subscriber class (class of the subscriber such as an ordinary subscriber or a priority subscriber). Further, while numerical value such as "100", "200" or the like is used in FIG. 4 as the subscriber class information, it is possible to apply any information to the subscriber class information if the information can identify each subscriber class.

### <AS: 51>

AS (51) carries out various kinds of application services. AS (51) of the present examplary embodiment provides the subscriber with the various kinds of application services in cooperation with S-CSCF (31).

### <A process carried out when acquiring the subscriber class information>

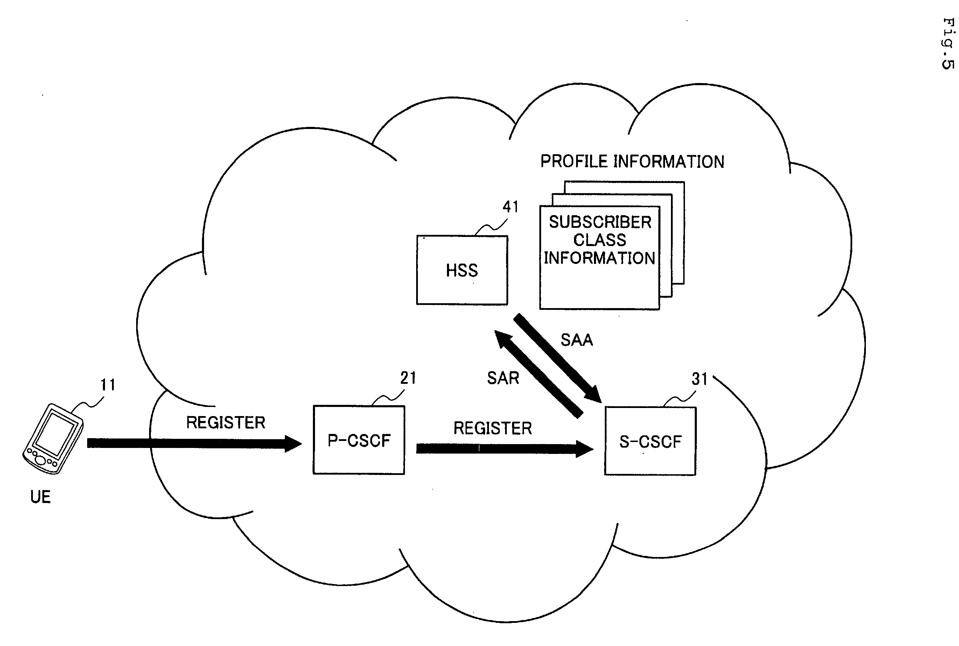

Next, a process, in which S-CSCF (31) acquires the subscriber class information from HSS (41), will be described with reference to FIG. 5.

First, the sender UE (11) sends a REGISTER signal to P-CSCF (21). The REGISTER signal, includes a private ID and a public ID.

When P-CSCF (21) receives the REGISTER signal, P-CSCF (21) sends the REGISTER signal to S-CSCF (31). When S-CSCF (31) receives the REGISTER signal, S-CSCF (31) sends a SAR (Server Assignment Request) signal to HSS (41) based on the REGISTER signal. The SAR signal, which includes the private ID and the public ID included in the REGISTER signal, is sent.

When HSS (41) receives the SAR signal, HSS (41) stores and manages information of the private ID and the public ID which are included in the SAR signal. Moreover, HSS (41) refers to the subscriber profile managing table (42) shown in FIG. 4 based on the private ID and then, acquires the profile information and the subscriber class information which are associated with the private ID. For example, in the case that private ID included in the SAR signal is Private ID "a", HSS (41) refers to the subscriber profile managing table (42) shown in FIG. 4 and then, acquires profile information-a and subscriber class information (100, 200, 200 and 400) which are associated with the private ID "a". Further, as shown in FIG. 4, in the case that the public ID and the subscriber class information are managed in a state associated each other, HSS (41) acquires the public ID and the subscriber class information which are associated each other. When HSS (41) sends a SAA (Server Assignment Answer) signal to S-CSCF (31), HSS (41) sends also the subscriber class information which is acquired from the subscriber profile managing table (42).

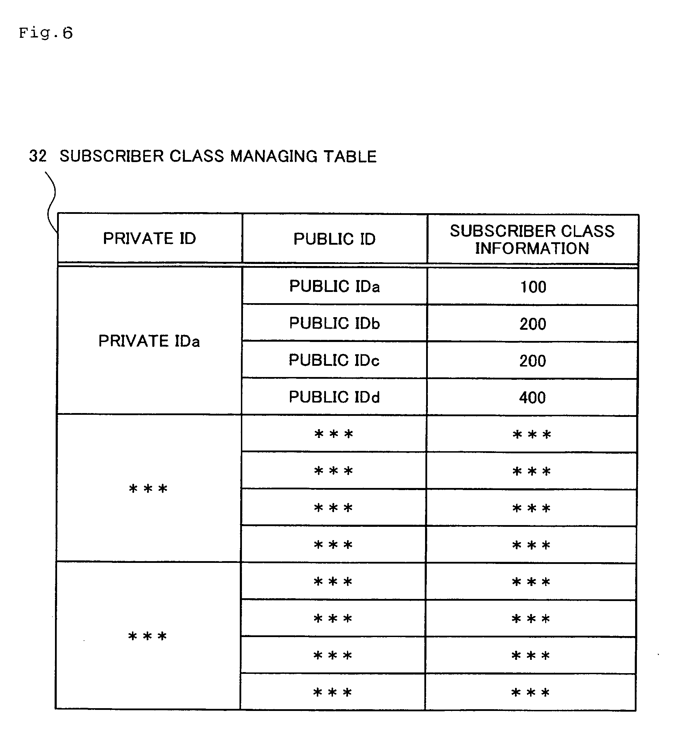

When S-CSCF (31) receives the SAA signal, S-CSCF (31) acquires the profile information and the subscriber class information. Then, S-CSCF (31) registers the subscriber class information, which is acquired from HSS (41), in a subscriber class managing table (32), as shown in FIG. 6. As a result, it becomes possible that S-CSCF (31) manages the subscriber class information, which is acquired from HSS (41), by use of the subscriber class managing table (32). FIG. 6 shows a table structure of the subscriber class managing table (32) and shows how the subscriber class information (100, 200, 200 and 400), which are associated with the private ID "a", is managed.

Further, according to the process mentioned above, HSS (41) sends the plural subscriber class information (100, 200, 200 and 400), which are associated with the private ID "a", to S-CSCF (31). However, it is also possible to change the process so as to send only the subscriber class information (100, 200,200 and 400), which are associated with the private ID "a" and the public ID, to S-CSCF (31).

Moreover, according to the process mentioned above, the case, in which S-CSCF (31) acquires the subscriber class information from HSS (41) and manages the subscriber class information by use of the subscriber class managing table (32), has been described. However, it is also possible to change the process so as to manage the subscriber class information in advance by use of the subscriber class managing table (32) shown in FIG 6.

### <A routing process>

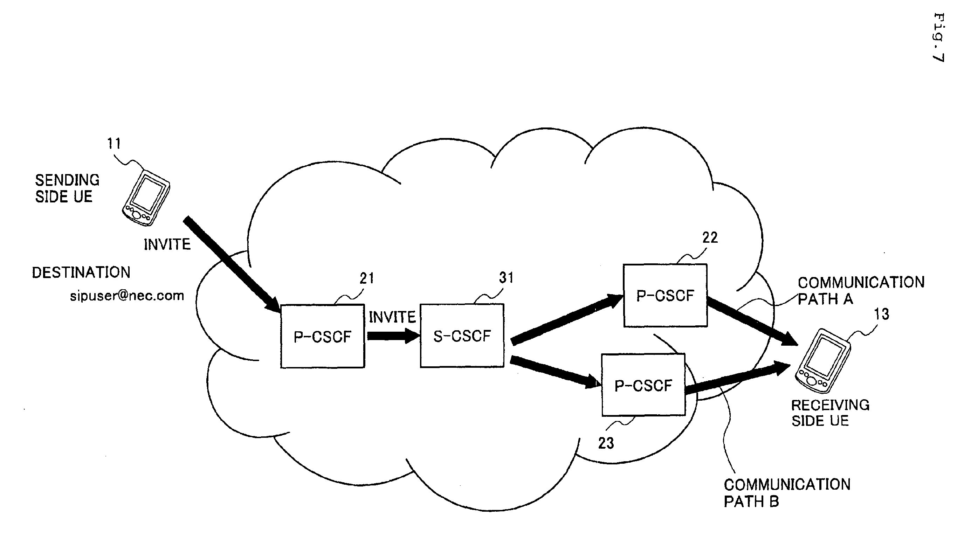

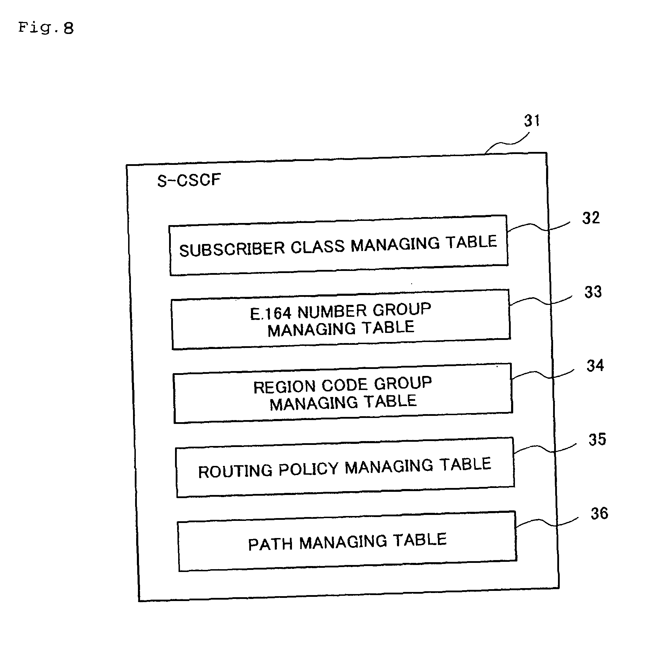

Next, a routing process in S-CSCF (31) will be described with reference to FIG. 7. It is assumed in the following description that S-CSCF (31) has a configuration which includes the subscriber class managing table (32), an E.164 number group managing table (33), a region code group managing table (34), a routing policy managing table (35) and a path managing table (36), as shown in FIG. 8.

The subscriber class managing table (32) manages "subscriber class information" in association with information (private ID and public ID) which is included in the INVITE signal, as shown in FIG. 6. As a result, it becomes possible for S-CSCF (31) to identify unique "subscriber class information" corresponding to information which is included in the INVITE signal.

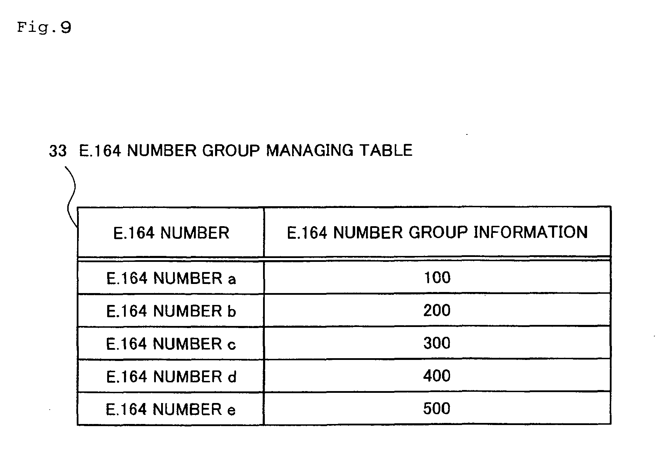

The E.164 number group managing table (33) manages "E.164 number group information" in association with information (E.164 number of From header or P-Asserted-Identity header) which is included in the INVITE signal, as shown in FIG. 9. As a result, it becomes possible for S-CSCF (31) to identify unique "E.164 number group information" corresponding to information which is included in the INVITE signal.

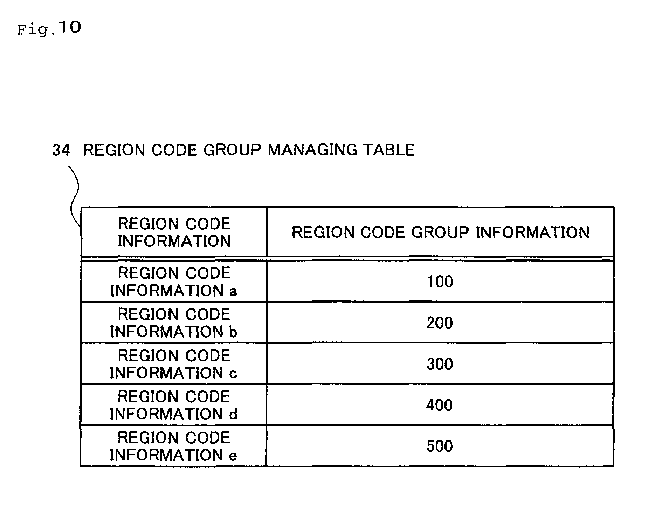

The region code group managing table (34) manages "region code group information" in association with information (region code information of "access-type" and "access-info" of P-Access-Network-Info header) which is included in the INVITE signal, as shown in FIG. 10. As a result, it becomes possible for S-CSCF (31) to identify unique "region code group information" corresponding to information which is included in the INVITE signal.

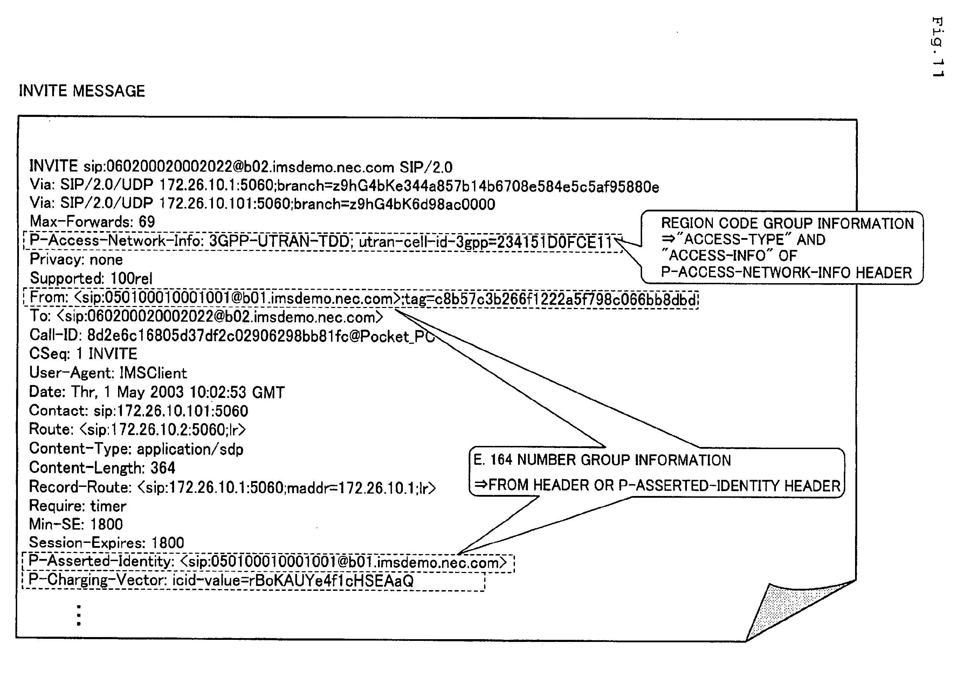

Further, FIG 11 shows a corresponding position of "From header", "P-Asserted-Identity header", and "access-type" and "access-info" of "P-Access-Network-Info header" which are included in the INVITE signal. FIG. 11 shows an exemplary message of the INVITE signal.

As a result, when S-CSCF (31) receives the INVITE signal, it becomes possible for S-CSCF (31) to acquire "subscriber class information, E.164 number group information and region code group information" corresponding to information which is included in the INVITE signal, with reference to the subscriber class managing table (32), the E.164 number group managing table (33) and the region code group managing table (34).

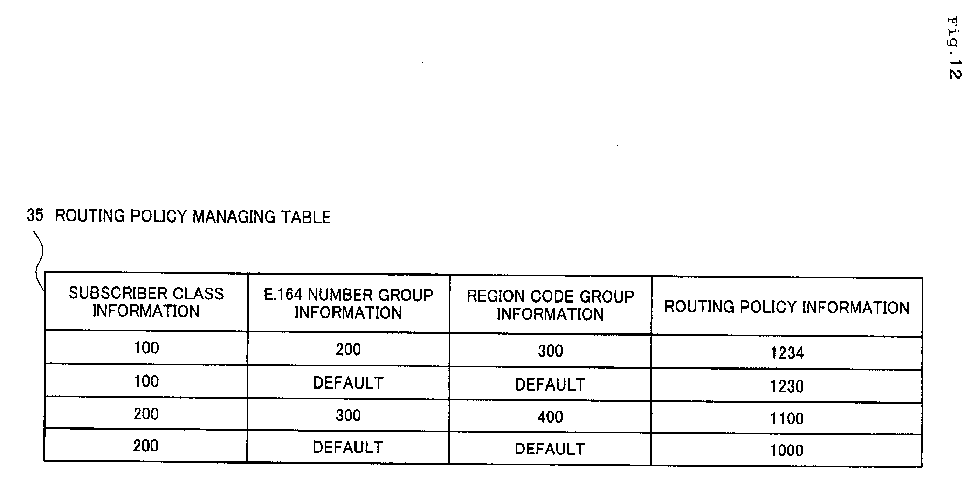

The routing policy managing table (35) manages "routing policy information", which is a determinant for determining a communication path, in association with "subscriber class information, E.164 number group information and region code group information", as shown in FIG. 12. As a result, it becomes possible for S-CSCF (31) to identify "routing policy information" corresponding to "subscriber class information, E.164 number group information and region code group information" which are identified uniquely based on the information included in the INVITE signal.

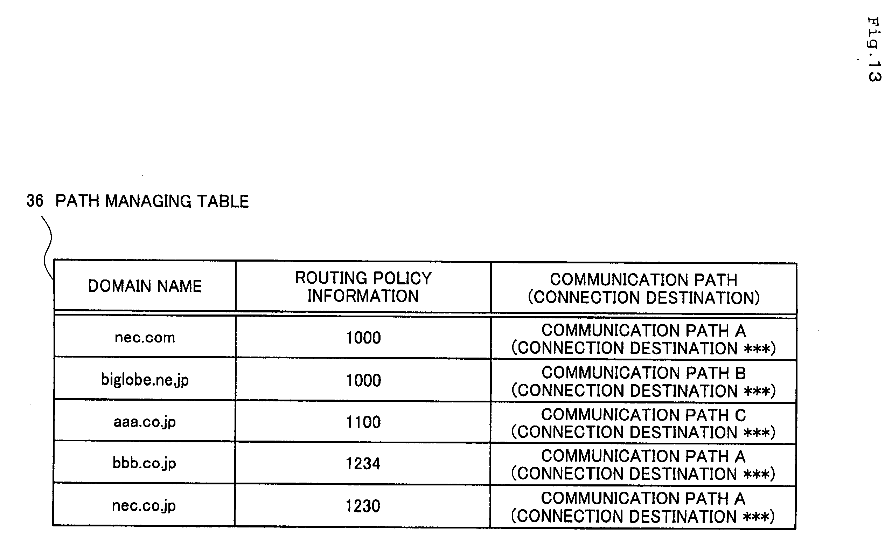

The path managing table (36) manages "communication path (connection destination)", which is used when carrying out signaling, in association with "domain name and routing policy information", as shown in FIG. 13. As a result, it becomes possible for S-CSCF (31) to identify "communication path (connection destination)" corresponding to "domain name", which is included in the INVITE signal, of the receiver UE (13), and "routing policy information" which the routing policy managing table (35) manages as shown in FIG. 12.

First, as shown in FIG. 7, the sender UE (11) sends the INVITE signal to P-CSCF (21). When P-CSCF (21) receives the INVITE signal, P-CSCF (21) sends the INVITE signal to S-CSCF (31). When S-CSCF (31) receives the INVITE signal, S-CSCF (31) decides a route based on the INVITE signal. Hereinafter, a specific process of routing will be described.

In the case that S-CSCF (31) of the present examplary embodiment receives the INVITE signal, S-CSCF (31) refers to the subscriber class managing table (32), the E.164 number group managing table (33) and the region code group managing table (34) based on information included in the INVITE signal and acquires "subscriber class information, E.164 number group information and region code group information" corresponding to information included in the INVITE signal.

Specifically, S-CSCF (31) searches the subscriber class managing table (32) shown in FIG. 6 based on the private ID and the public ID included in the INVITE signal and then, acquires "subscriber class information" which is associated with the private ID and the public ID. For example, in the case that information included in the INVITE signal shows that private ID is equal to ID "a" and public ID is equal to ID "b", S-CSCF(31) acquires "subscriber class information; 200" which is associated with the private ID "a" and the public ID "b".

Moreover, S-CSCF (31) searches the E.164 number group managing table (33) shown in FIG. 9 based on E.164 number of the From header or the P-Asserted-Identity header which is included in the INVITE signal and then, acquires "E.164 number group information". For example, in the case that information included in the INVITE signal shows that E.164 number is equal to "e", S-CSCF (31) acquires "E.164 number group information; 500" which is associated with the E.164 number-"e".

Moreover, S-CSCF (31) searches the region code group managing table (34) shown in FIG. 10 based on the region code information of "access-type" and "access-info" of P-Access-Network-Info header included in the INVITE signal and then, acquires "region code group information". For example, in the case that information included in the INVITE signal shows that region code information of "access-type" and "access-info" of the P-Access-Network-Info header is equal to "d", S-CSCF (31) acquires "region code group information; 400" which is associated with the region code information-"d".

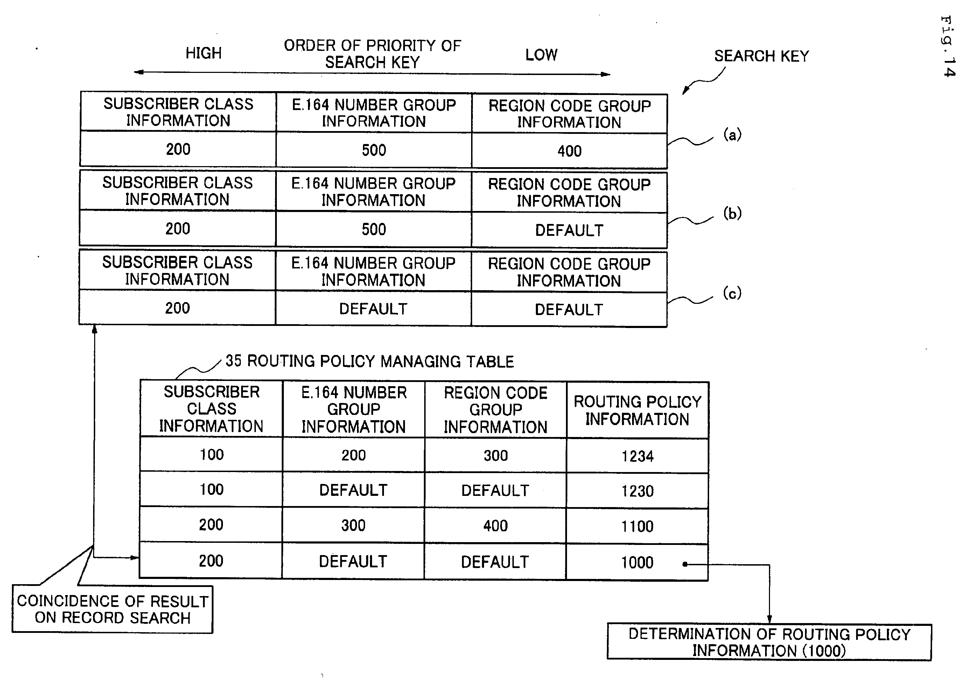

As a result, in the case that S-CSCF (31) receives the INVITE signal, S-CSCF (31) acquires "subscriber class information, E.164 number group information and region code group information corresponding to information which is included in the INVITE signal. Then, it becomes possible that a search key, which is shown in FIG. 14 (a) and which is for determining routing policy information, is made based on the acquired information. Further, the search key shown in FIG. 14 (a) is made in order of priority which is set to S-CSCF (31) in advance. FIG. 14 (a) shows a state that the search key is made in order of priority of "subscriber category information", "E.164 number group information" and "region code group information".

Next, S-CSCF (31) searches the routing policy managing table (35) shown in FIG. 12 based on the search key "subscriber class information; 200, E.164 number group information; 500 and region code group information; 400" which is made as mentioned above and which is shown in FIG. 14 (a). Then, S-CSCF (31) determines "routing policy information" corresponding to the search key "subscriber class information; 200, E.164 number group information; 500 and region code group information; 400" which is shown in FIG. 14 (a).

First, S-CSCF (31) searches the routing policy managing table (35) based on the search key "subscriber class information; 200, E.164 number group information; 500 and region code group information; 400" which is shown in FIG. 14 (a). Then, S-CSCF (31) judges whether a record corresponding to the search key "subscriber class information; 200, E.164 number group information; 500 and region code group information; 400", which is shown in FIG. 14 (a), exists in the routing policy managing table (35).

In this case, S-CSCF (31) judges that the record, which is corresponding to the search key "subscriber class information; 200, E.164 number group information; 500 and region code group information; 400" shown in Fig. 14 (a), does not exist in the routing policy managing table (35). For this reason, S-CSCF (31) excludes "region code group information", from the search key (region code group information is set to default), which has the lowest order of priority among the search key "subscriber class information, E.164 number group information and region code group information" shown in Fig. 14 (a). Moreover, S-CSCF (31) searches the routing policy managing table (35) based on a search key "subscriber class information; 200, E.164 number group information; 500 and region code group information; default" which is shown in FIG. 14 (b). Then, S-CSCF (31) judges whether a record corresponding to the search key "subscriber class information; 200, E.164 number group information; 500 and region code group information; default", which is shown in FIG. 14 (b), exists in the routing policy managing table (35).

In this case, S-CSCF (31) judges that the record, which corresponds to the search key "subscriber class information; 200, E.164 number group information; 500 and region code group information; default" shown in Fig. 14 (b), does not exist in the routing policy managing table (35). For this reason, S-CSCF (31) excludes "E.164 number group information" from the search key (E.164 number group information is set to default), which has the second lowest order of priority among the search key "subscriber class information, E.164 number group information and region code group information" shown in Fig. 14 (b). Moreover, S-CSCF (31) searches the routing policy managing table (35) based on a search key "subscriber class information; 200, E.164 number group information; default and region code group information; default" which is shown in FIG. 14 (c). Then, S-CSCF (31) judges whether a record corresponding to the search key "subscriber class information; 200, E.164 number group information; default and region code group information; default", which is shown in FIG. 14 (c), exists in the routing policy managing table (35).

In this case, S-CSCF (31) judges that the record, which corresponds to the search key "subscriber class information; 200, E.164 number group information; default and region code group information; default" shown in Fig. 14 (c), exists in the routing policy managing table (35). For this reason, S-CSCF (31) acquires "routing policy information; 1000", which is associated with the record corresponding to the search key "subscriber category information; 200, E.164 number group information; default and region code group information; default" shown in Fig. 14 (c), from the routing policy managing table (35).

As a result, it becomes possible for S-CSCF (31) to identify "routing policy information; 1000", which is a determinant for determining the communication path, based on information included in the INVITE signal.

Next, S-CSCF (31) searches the path managing table (36) shown in FIG. 13 by using search keys of "domain name; nec.com" of the receiver UE (13)" which is included in the INVITE signal" and "routing policy information; 1000" which is identified in the above mentioned process. Then, S-CSCF (31) identifies "communication path A" corresponding to "domain name; nec.com and routing policy information; 1000".

Next, S-CSCF (31) connects to the receiver P-CSCF (22), which exists on "communication path A" identified as mentioned above, and sends the INVITE signal to the receiver UE (13) via the receiver P-CSCF (22) to which S-CSCF (31) connects. Then, S-CSCF (31) controls the sender UE (11) and the receiver UE (13) to carry out signaling via "communication path A".

Further, in the case that "communication path" corresponding to "domain name and routing policy information" does not exist in the path managing table (36), S-CSCF (31) excludes "routing policy information" from the search key (routing policy information is set to default). Moreover, S-CSCF (31) identifies "communication path" corresponding to "domain name; nec.com and routing policy information; default", and sends the INVITE signal to the receiver UE (13) by use of the identified "communication path". Then, S-CSCF (31) controls the sender UE (11) and the receiver UE (13) to carry out signaling via "communication path A".

As mentioned above, in the case that S-CSCF (31) of the present examplary embodiment receives the INVITE signal from the sender UE (11), S-CSCF (31) determines "communication path" corresponding to information, which is included in the INVITE signal, on the sender UE (11). Then, S-CSCF (31) sends the INVITE signal to the receiver UE (13) via the determined "communication path", and controls the sender UE (11) and the receiver UE (13) to carry out signaling.

In detail, in the case that S-CSCF (31) of the present examplary embodiment receives the INVITE signal from the sender UE (11), S-CSCF (31) refers to the subscriber class managing table (32), the E.164 number group managing table (33) and the region code group managing table (34) based on information, which is included in the INVITE signal, on the sender UE (11). Then, S-CSCF (31) acquires "subscriber class information, E.164 number group information and region code group information," corresponding to information, which is included in the INVITE signal, on the sender UE (11). Then, S-CSCF (31) refers to the routing policy managing table (35) based on "subscriber class information, E.164 number group information and region code group information", and acquires "routing policy information" corresponding to "subscriber class information, E.164 number group information and region code group information". At this point, S-CSCF (31) changes order of "subscriber class information, E.164 number group information and region code group information" based on priority set to the system in advance, and refers to the routing policy managing table (35) by use of the changed information as the search key and identifies "routing policy information" corresponding to the search key. Moreover, S-CSCF (31) refers to the path managing table (36) based on "domain name" of the receiver UE (13), and the "routing policy information" which is identified as mentioned above. Then, S-CSCF (31) identifies "communication path" based on "domain name, routing policy imformation", and controls signaling by use of the identified "communication path".

As a result, in the case that signaling, which uses SIP, is carried out, it is possible for the call control system of the present examplary embodiment to change the communication path of signaling dynamically, corresponding to information on the sender UE (11), which is included in the INVITE signal.

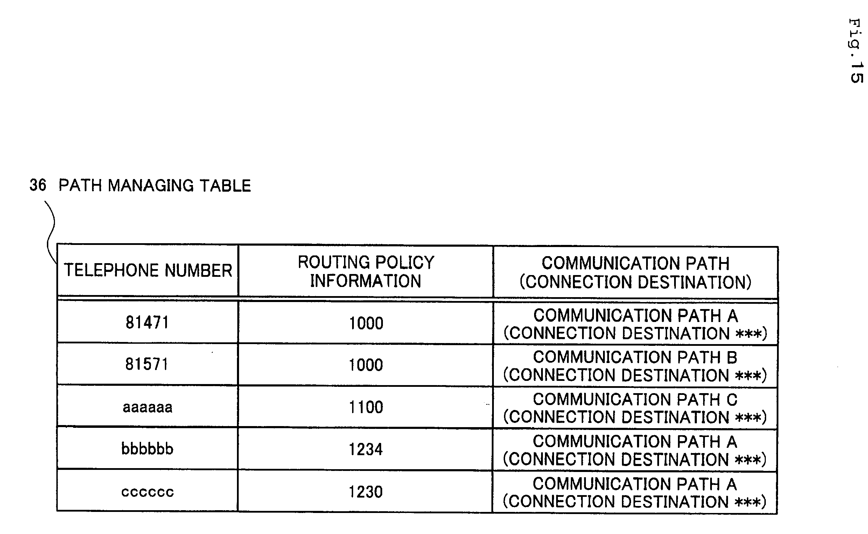

Further, according to the exemplary embodiment of the present invention mentioned above, S-CSCF (31) identifies "communication path" (connection destination) corresponding to "domain name and routing policy information" by referring to the path managing table (36) on the basis "domain name" of the receiver UE (13), which is included in the INVITE signal, and "routing policy information" which is identified by S-CSCF (31). However, it is also possible to use "telephone number" as information on the receiver UE (13), which is included in the INVITE signal. In this case, the path managing table (36) manages "communication path (connection destination)" in association with "telephone number and routing policy information", as shown in FIG. 15. As a result, it becomes possible for S-CSCF (31) to identify "communication path (connection destination)" corresponding to " telephone number" of the sender UE (13), which is included in the INVITE signal, and "routing policy information" which is identified by S-CSCF (31), and to control signaling by use of the identified "communication path (connection destination)".

### (A second exemplary embodiment of the present invention)

Next, a second exemplary embodiment of the present invention will be described.

According to the first exemplary embodiment of the present invention, S-CSCF (31) refers to the subscriber class managing table (32), the E.164 number group managing table (33) and the region code group managing table (34) based on information on the sender LIE (11), which is included in the INVITE signal, ,and acquires "subscriber class information, E.164 number group information and region code group information" corresponding to information on the sender UE (11), which is included in the INVITE signal. However, it is possible to acquire other information such as "domain group information", "access type group information" and "enterprise code group information" in addition to information of "subscriber class information, E.164 number group information and region code group information" mentioned above based on information on the sender UE (11), which is included in the INVITE signal.

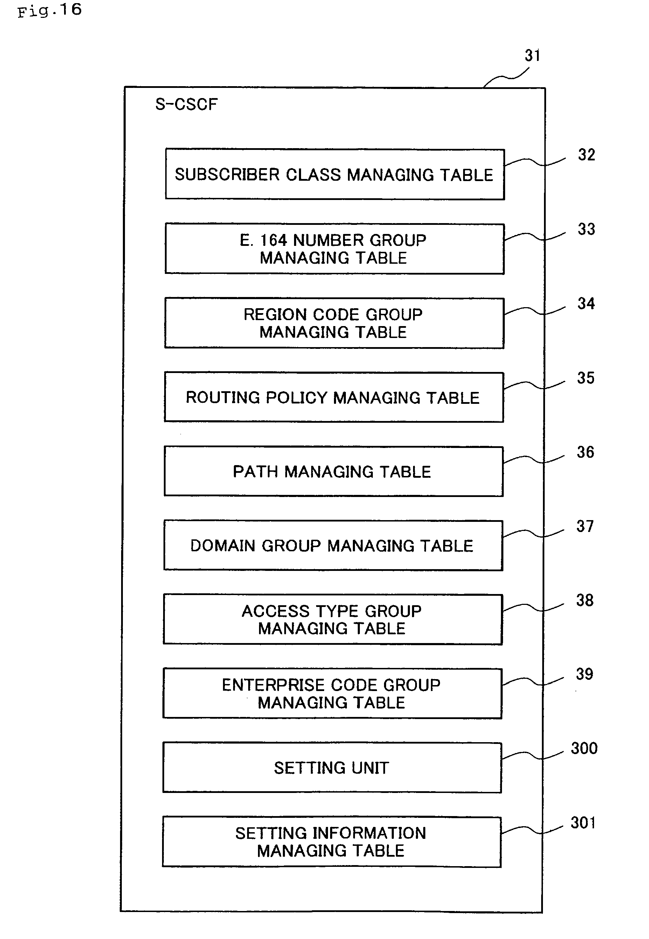

In this case, as shown in FIG. 16, S-CSCF (31) has a configuration which includes a domain group managing table (37), an access type group managing table (38) and an enterprise code group managing table (39) in addition to the configuration shown in FIG. 8.

The domain group managing table (37) manages "domain group information" in association with information (domain name of Request-URI) which is included in the INVITE signal. As a result, it is possible for S-CSCF (31) to identify unique "domain group information" corresponding to information which is included in the INVITE signal.

The access type group managing table (38) manages "access type group information" in association with information ("access-info" of P-Access-Network-Info header) which is included in the INVITE signal. As a result, it is possible for S-CSCF (31) to identify unique "access type group information" corresponding to information which is included in the INVITE signal.

The enterprise code group managing table (39) manages "enterprise code group information" in association with information ("orig-ioi" of P-Charging-Vector header) which is included in the INVITE signal. As a result, it is possible for S-CSCF (31) to identify unique "enterprise code group information" corresponding to information which is included in the INVITE signal.

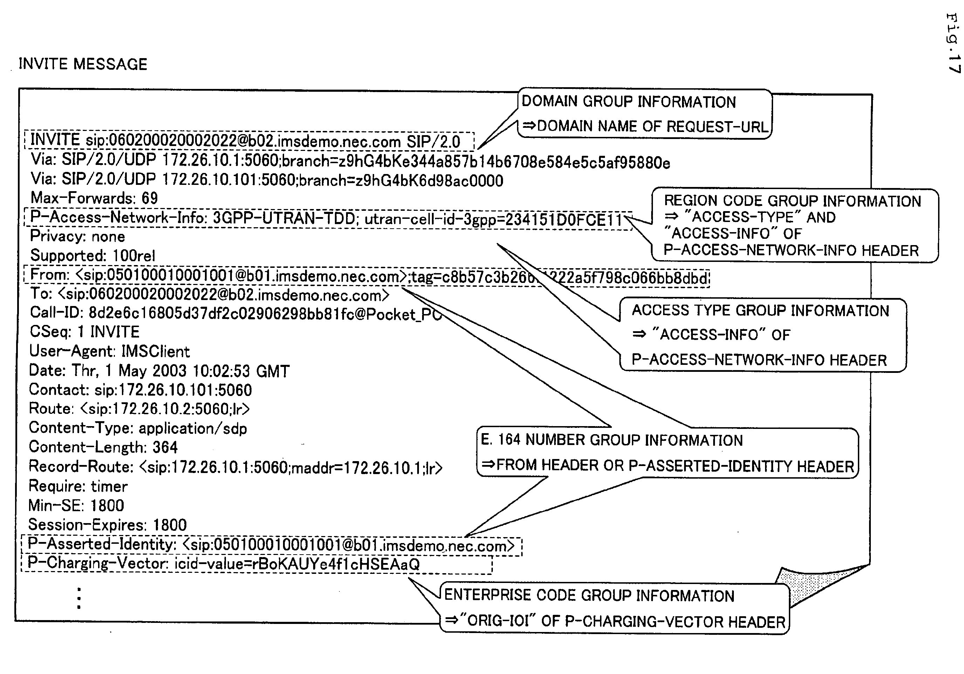

Further, corresponding positions of "domain name", "access-info" and "orig-ioi", which are included in the INVITE signal, are shown in FIG. 17. FIG 17 shows an exemplary message of the INVITE signal.

As mentioned above, if it is possible for S-CSCF to identify information (usage information), which can be used when determining the communication path, out of information on the sender UE (11), which is included in the INVITE signal, any information which can be identified by S-CSCF is applicable. However, as shown in FIG. 16, it is necessary for S-CSCF (31) to make various kinds of managing tables (32 to 34 and 37 to 39) in order to identify unique usage information corresponding to information on the sender UE (11), which is included in the INVITE signal.

In the case that S-CSCF (31) includes various kinds of managing tables (32 to 34 and 37 to 39) as shown in FIG. 16, it is also possible for S-CSCF (31) to include a setting unit (300) for setting usage information, which is used when determining the communication path, so that S-CSCF (31) can determine the communication path by use of usage information set by the setting unit (300). As a result, it is possible to improve general purpose property of the system, since it is possible to change dynamically usage information which is used when S-CSCF (31) determines the communication path. Hereinafter, a call control system will be described in detail with reference to FIGs. 16 to 18.

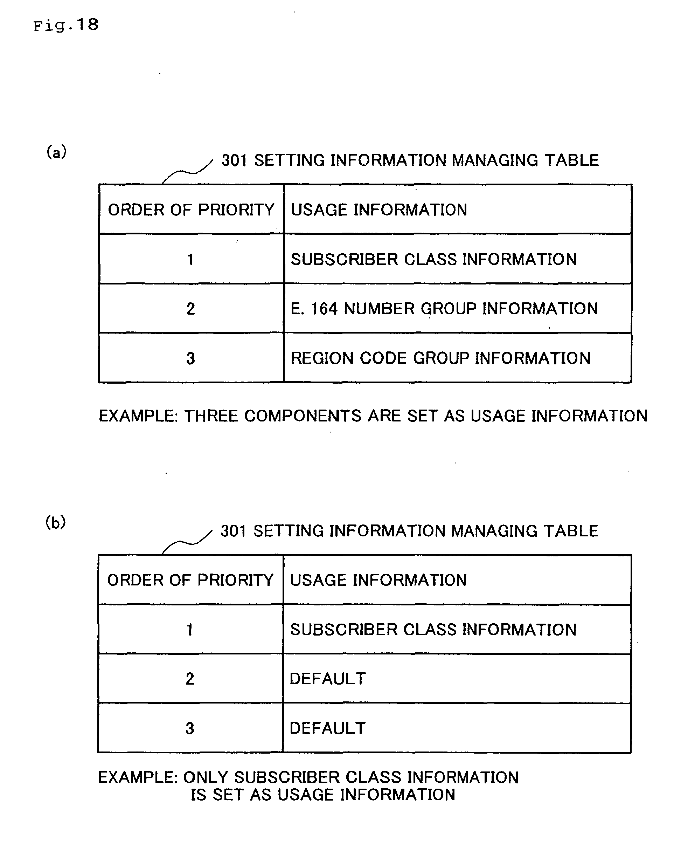

In order to set usage information which is used when S-CSCF (31) determines the communication path, S-CSCF (31) has a configuration which includes a setting information managing table (301) shown in FIG. 18 (a). The setting information managing table (301) shown in FIG. 18 (a) manages "usage information", and "order of priority" of "usage information". Further, "subscriber class information", "E.164 number group information", "region code group information", "domain group information", "access type group information" and "enterprise code group information," mentioned above are exemplified as "usage information".

S-CSCF (31) sets "usage information" to the setting information managing table (301) by use of the setting unit (300) and determines the communication path by use of "usage information" which is set to the setting information managing table (301).

For example, the setting information managing table (301) shown in FIG. 18 (a) shows a case in which three components are set in the setting information managing table (301) as the usage information, that is, "subscriber class information" is set as the usage information with the first " order of priority", and "E.164 number group information" is set as the usage information with the second "order of priority", and "region code group information" is set as the usage information with the third "order of priority". As a result, the setting information managing table (301) manages the usage information in order of priority of "subscriber class information, E.164 number group information and region code group information". For this reason, in the case that S-CSCF (31) receives the INVITE signal, S-CSCF (31) refers to the setting information managing table (301) and acquires "subscriber class information, E.164 number group information and region code group information", which are set to the setting information managing table (301). As a result, S-CSCF (31) acquires "subscriber class information, E.164 number group information and region code group information" corresponding to information which is included in the INVITE signal, and makes a search key "subscriber class information; 200, E.164 number group information; 500 and region code group information; 400", which is shown in FIG. 14 (a) and which is used for determining routing policy information, based on the acquired information, as well as the first exemplary embodiment of the present invention.

Moreover, the setting information managing table (301) shown in FIG. 18 (b) shows a case in which one component is set as the usage information. Specifically, the setting information managing table (301) shows a case in which "subscriber class information" is set as the usage information with the first "order of priority", and other information is not used (a case in which usage information with the second and the third "order of priority" is set to "default"). As a result, the setting information managing table (301) manages the usage information in order of priority of "subscriber class information, default and default". For this reason, in the case that S-CSCF (31) receives the INVITE signal, S-CSCF (31) acquires "subscriber class information," corresponding to information which is included in the INVITE signal and makes a search key "subscriber class information; 200, default and default", which is for determining the routing policy information, based on the acquired information.

Further, the routing policy managing table (35) of the present examplary embodiment is configured so as to manage "routing policy information" in association with not only "subscriber class information, E.164 number group information and region code group information," but also all usage information, which can be set by the setting unit (300), as shown in FIG. 13.

As mentioned above, S-CSCF (31) of the present examplary embodiment sets the usage information, which is used when S-CSCF (31) determines the communication path, to the setting information managing table (301). Then, in the case that S-CSCF (31) receives the INVITE signal, S-CSCF (31) refers to the setting information managing table (301), and acquires information, which is set to the setting information managing table (301), out of the sender information included in the INVITE signal, and determines the communication path by use of the acquired information. As a result, it is possible to improve general purpose property of the system, since it is possible to change dynamically the usage information which is used when S-CSCF (31) determines the communication path.

### (A third exemplary embodiment of the present invention)

Next, a third exemplary embodiment of the present invention will be described.

According to the call control system of the exemplary embodiments of the present invention mentioned above, in the case that S-CSCF (31) receives the INVITE signal from the sender UE (11), S-CSCF (31) determines "communication path (connection destination)" corresponding to information on the sender UE (11), which is included in the INVITE signal. Then, S-CSCF (31) sends the INVITE signal to the receiver UE (13) via the determined "communication path (connection destination)", and controls the sender UE (11) and the receiver UE (13) to carry out signaling.

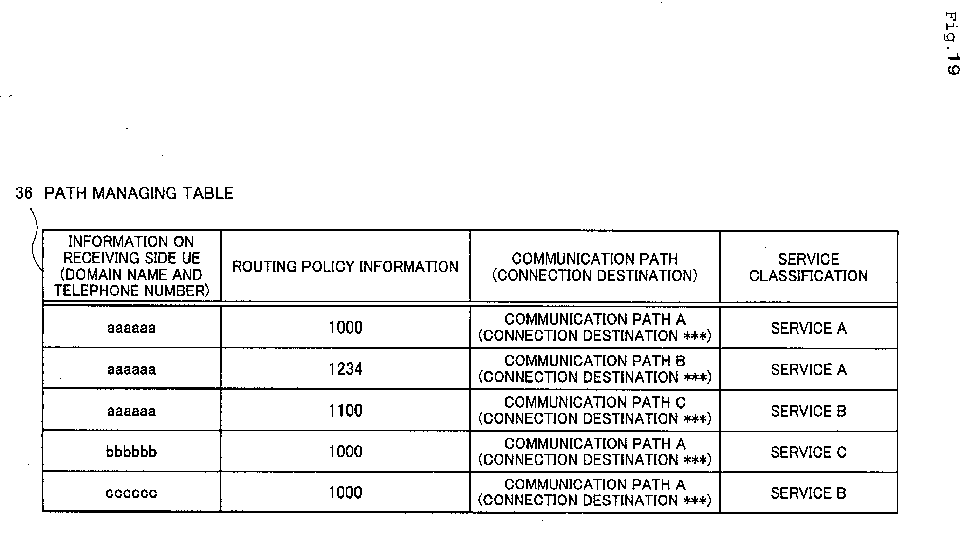

According to a call control system of the third exemplary embodiment of the present invention, in the case that S-CSCF (31) receives the INVITE signal from the sender UE (11), S-CSCF (31) determines "service classification" corresponding to information, which is included in the INVITE signal, on the sender UE (11). Then, S-CSCF (31) controls so as to provide the sender UE (11) with the determined "service classification". As a result, it becomes possible for S-CSCF (31) to provide the sender UE (11) with "service classification" corresponding to information on the sender UE (11), which is included in the INVITE signal. Therefore, it is possible to provide various kinds of services. For example, it is possible for S-CSCF (31) to control for assigning wide bandwidth, which is corresponding to information on the sender UE (11), to the sending UE (11) and to activate AS (51) to notify the sending UE (11) of a guidance message or the like corresponding to information of the sending UE (11), etc.. Further, in order to determine "service classification" corresponding to information on the sender UE (11), which is included in the INVITE signal, it is necessary for S-CSCF (31) to be configured so as to manage "communication path (connection destination)" and "service classification" in association with "information (domain name and telephone number) on the receiver UE" and "routing policy information", as shown in FIG. 19.

As a result, it becomes possible for S-CSCF (31) to identify "communication path (connection destination)" and " service classification" corresponding to " information (domain name, telephone number or the like), on the receiver UE (13)", which is included in the INVITE signal, and "routing policy information" which is identified by S-CSCF (31) and to control signaling by use of the identified " communication path (connection destination)" and furthermore, to control so as to provide the sender UE (11) with various kind of services corresponding to the identified "service classification".

### (A fourth exemplary embodiment of the present invention)

Next, a fourth exemplary embodiment of the present invention will be described.

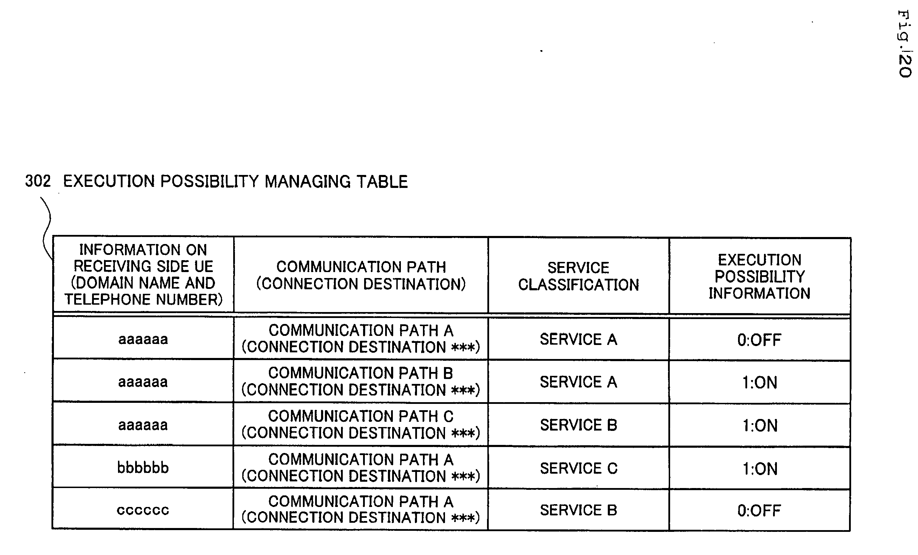

According to the fourth exemplary embodiment of the present invention, in the case that S-CSCF (31) receives the INVITE signal, a call control system is characterized in that S-CSCF (31) judges whether the determining process for determining the communication path and the service classification mentioned above should be carried out based on receiver information which is included in the INVITE signal. As a result, it becomes possible to control for judging whether the determining process for determining the communication path and the service classification should be carried out based on the receiver information which is included in the INVITE signal. Hereinafter, the fourth exemplary embodiment of the present invention will be described in detail with reference to FIG. 20.

S-CSCF (31) of the present examplary embodiment has a configuration which includes an execution possibility managing table (302) shown in FIG 20. As shown in FIG 20, the execution possibility managing table (302) manages "execution possibility information", "communication path (connection destination)" and "service classification" in association with the receiver information, that is, "domain name, telephone number or the like".

"Execution possibility information", which is information for judging whether the determining process for determining the communication path and the service classification should be carried out, controls the determining process mentioned above to be carried out in the case of information "1: ON" which indicates that execution is possible, and controls the determining process mentioned above not to be carried out in the case of information "0: OFF" which indicates that execution is impossible.

Further, while the execution possibility managing table (302) shown in FIG 20 is configured so as to determine whether the determining process mentioned above should be carried out based on ON and OFF of a flag, it is possible to apply any information to the execution possibility information if it is possible to determine based on the information whether the above-mentioned determining process should be carried out.

"Communication path (connection destination)" is information for identifying a communication path which connects to the receiver UE (13), in the case that the above-mentioned determining process is not carried out.

"Service classification" is information for identifying a service, which is provided to the sender UEs (11 and 12), out of various kinds of services, in the case that the above-mentioned determining process is not carried out.

Further, in the case that S-CSCF (31) receives the INVITE signal, S-CSCF (31) refers to the execution possibility managing table (302) based on information (domain name or telephone number) on the receiver UE (13), which is included in the INVITE signal, and then, judges whether the execution possibility information, which is associated with information on the receiver UE, indicates that execution is possible or impossible.

In the case that the execution possibility information is information "1:ON" which indicates that execution is possible, S-CSCF (31) carries out the determining process for determining the communication path and the service classification which has been described in the above-mentioned exemplary embodiment of the present invention.

On the other hand, in the case that the execution possibility information is information "0: OFF which indicates that execution is impossible, S-CSCF (31) does not carry out the determining process for determining the communication path and the service classification and controls signaling via "communication path (connection, destination)" which is associated with information on the receiver UE (13). Moreover, S-CSCF (31) controls so as to provide the sender UE (11 or 12) with various kinds of services corresponding to "service classification" which is associated with information on the receiver UE (13).

As a result, it becomes possible for S-CSCF (31) to carry out control for judging whether the above-mentioned determining process for determining the communication path and the service classification should be carried out based on receiver information which is included in the INVITE signal, in the case that S-CSCF (31) receives the INVITE signal.

Further, the above-mentioned exemplary embodiments of the present invention are preferred exemplary embodiments, and scope of the present invention is not limited to the above-mentioned exemplary embodiments of the present invention. Therefore, it is possible for a person skilled in the art to make exemplary embodiments which include various changes through correcting and substituting the above-mentioned exemplary embodiments of the present invention without departing from the scope of the present invention as defined by the appended claims.

For example, it is also possible to carry out a control operation in each apparatus, which composes the call control system of the above-mentioned embodiment of the present invention, by use of hardware, software, or combination of both of them.

Further, in the case that a process is carried out by use of software, it is possible to install a program, in which sequence of the process is stored, in a memory of a computer mounted on a dedicated hardware and to make the computer to carry out the program. It is also possible to install the program in a general purpose computer, which can carry out various kinds of processes, and to make the computer carry out the program.

For example, it is possible to store the program in advance in a hardware disk and ROM (Read Only Memory) which are used as a storage medium. It is also possible to store (record) the program in a removable storage medium temporarily or permanently. It is possible to provide such removable storage medium as a so-called packaged software. Further, a floppy (registered trademark) disk, CD-ROM (Compact Disc Read Only Memory), a MO (Magneto Optical) disk, DVD (Digital Versatile Disc), a magnetic disk and a semiconductor memory are exemplified as the removable storage medium.

Further, the program, which is read from the removable storage medium mentioned above, is installed in the computer. Or, the program is transferred to the computer from a download site by wireless transmission. Or, the program is transferred to the computer by wire transmission through a network.

Moreover, according to the exemplary embodiments of the present invention, it is possible that the call control system is configured not only so as to carry out the process sequentially according to the operation which is described in the exemplary embodiment of the present invention mentioned above but also so as to carry out the process simultaneously or individually based on processing capability of the apparatus, which carries out the process, or based on necessity.

Moreover, according to the exemplary embodiments of the present invention, it is also possible for the call control system to have a configuration of logical combination of plural apparatuses or to have a structure that a plurality of apparatuses, each of which is a component of the call control system, are installed in the same chassis.

### [Availability on the Industry]

The present invention is applicable to various kinds of communication systems which use SIP

### [Brief Description of the Drawings]

FIG 1 shows an exemplary system configuration of a call control system related to the present invention.
FIG. 2 is a diagram for explaining an outline of a call control system according to an exemplary embodiment of the present invention.
FIG 3 shows an exemplary system configuration of the call control system according to the exemplary embodiment of the present invention.
FIG 4 shows an exemplary table structure of a subscriber profile managing table (42).
FIG. 5 is a diagram for explaining an operation carried out when S-CSCF (31) acquires subscriber class information from HSS (41).
FIG 6 shows an exemplary table structure of a subscriber class managing table (32).
FIG 7 is a diagram which explains a case that S-CSCF (31) carries out a routing process.
FIG. 8 shows an exemplary configuration of S-CSCF (31) according to a first exemplary embodiment of the present invention.
FIG. 9 shows an exemplary table structure of an E. 164 number group managing table (33).
FIG 10 shows an exemplary table structure of a region code group managing table (34).
FIG. 11 shows an example of an INVITE message.
FIG. 12 shows an exemplary table structure of a routing policy managing table (35).
FIG 13 shows an exemplary table structure of a path managing table (36).
FIG 14 is a diagram for explaining an operation carried out when determining "routing policy information".
FIG 15 is a second diagram which shows an exemplary table structure of the path managing table (36).
FIG 16 shows an exemplary configuration of S-CSCF (31) according to a second exemplary embodiment of the present invention.
Fig. 17 shows an example of the INVITE message.
FIG 18 shows an exemplary table structure of a setting information managing table (301).
FIG. 19 shows an exemplary table structure of the path managing table (36) according to a third exemplary embodiment of the present invention.
FIG 20 shows an exemplary table structure of an execution possibility managing table (302).

### [Description of Code]

| | |
|---|---|
| 1 | Sender terminal |
| 2 | Receiver terminal |
| 3 | Call control apparatus |
| 4 | Determining unit (determining means) |
| 5 | Control unit (control means) |
| 11 or 12 | Sender UE |
| 13 | Receiver UE |
| 21, 22 and 23 | P-CSCF |
| 31 | S-CSCF |
| 32 | Subscriber class managing table |
| 33 E. | 164 number group managing table |
| 34 | Region code group managing table |
| 35 | Routing policy managing table |
| 36 | Path managing table |
| 37 | Domain group managing table |
| 38 | Access type group managing table |
| 39 | Enterprise code group managing table |
| 300 | Setting unit (setting means) |
| 301 | Setting information managing table |
| 302 | Execution possibility managing table |
| 41 | HSS |
| 42 | Subscriber profile managing table |
| 51 | AS |

## Claims

1. A call control apparatus to determine a communication path of signaling between a sender and a receiver, comprising:
a determining means (4) for determining a communication path corresponding to information on the sender, wherein the information on the sender is included in an INVITE signal received from the sender; and
a control means (5) for controlling the signaling via the communication path determined by the determining means,
the call control apparatus further comprising:
a setting means (300) for setting, in a setting information managing table (301), a plurality of usage information items that are used for determining a communication path, and their order of priority,
wherein the INVITE signal includes a plurality of information items on the sender, and
the determining means (4) is adapted, when receiving the INVITE signal,
to refer to the setting information managing table (301),
to acquire usage information with the first order of priority out of said plurality of usage information items set in the setting information managing table (301), wherein said acquired usage information item corresponds to an information item on the sender that exists in the INVITE signal, and
to determine the communication path based on the acquired usage information item.

2. The call control apparatus according to claim 1,
wherein the determining means comprises a communication determination means for determining a communication path corresponding to the information on the sender and information on the receiver, both being included in the INVITE signal.

3. The call control apparatus according to claim 1 or 2,
wherein the call control apparatus further comprises a policy managing means (35) for managing policy information, which is a determinant for determining the communication path, in association with a search key composed of the information on the sender, and
wherein the determining means searches the policy managing means by use of the acquired information as a search key, and in the case that a search key corresponding to the acquired information does not exist in the policy managing means, the determining means searches the policy managing means by use of the acquired information as a search key, from which the acquired information is deleted in reverse order of the priority, and in the case that a search key corresponding to the acquired information exists in the policy managing means, the determining means acquires the policy information, wherein the policy information is associated with the search key, from the policy managing means, and determines a communication path corresponding to the acquired policy information.

4. The call control apparatus according to claim 3,
wherein the call control apparatus further comprises a path managing means (36) for identifying the communication path in association with a search key, composed of the policy information and the information on receiver; and
wherein the determining means refers to the path managing means by use of the policy information and the information on receiver as a search key, and in the case that a search key corresponding to the policy information and the information on receiver exists in the path managing means, the determining means acquires a communication path, associated with the search key, from the path managing means and determines the communication path.

5. The call control apparatus according to claim 4,
in the case that a search key corresponding to the policy information and the information on receiver does not exist in the path managing means, but a search key corresponding to the information on receiver exists in the path managing means, the determining means acquires the information on communication path, which is associated with the search key, from the path managing means and determines the communication path.

6. The call control apparatus according to any one of claims 1 to 5,
wherein the determining means further comprises a service determination means for determining a service corresponding to the information on the sender; and
wherein the control means controls so as to provide the sender with a service which is determined by the determining means.

7. The call control apparatus according to any one of claims 1 to 6,
wherein the call control apparatus further comprises an execution possibility managing means for managing execution possibility information, wherein the execution possibility information determines whether the determining means should carry out the determination or not, and a communication path which is used when the determination is not carried out, in association with information on receiver; and
wherein the determining means refers to the execution possibility managing means based on the information on receiver included in the INVITE signal, and in the case that execution possibility information, associated with the information on receiver, is information which indicates that execution is possible, the determining means carries out the determination, and in the case that execution possibility information is information which indicates that execution is impossible, the determining means does not carry out the determination; and
in the case that the determining means does not carry out the determination, the control means controls the signaling via a communication path wherein the execution possibility managing means manages in association with the information on receiver.

8. A call control system to determine a communication path of signaling between a sender terminal and a receiver terminal, at least comprising a sender terminal, a receiver terminal, and a call control apparatus:
wherein the call control apparatus determines a communication path of signaling carried out between the sender terminal and the receiver terminal,
wherein the call control apparatus comprises:
a determining means (4) for determining a communication path corresponding to sender wherein the sender information is included in an INVITE signal received from a sender terminal, and a control means (5) for controlling the signaling via the communication path determined by the determining means,
the call control apparatus further comprising:
a setting means (300) for setting, in a setting information managing table (301), a plurality of usage information items that are used for determining a communication path, and their order of priority,
wherein the INVITE signal includes a plurality of information items on the sender terminal, and
the determining means (4) is adapted, when receiving the INVITE signal,
to refer to the setting information managing table (301),
to acquire usage information with the first order of priority out of said plurality of usage information items set in the setting information managing table (301), wherein said acquired usage information item corresponds to an information item on the sender terminal that exists in the INVITE signal, and
to determine the communication path based on the acquired usage information item.

9. A call control method for determining a communication path of signaling between a sender and a receiver, comprising the steps of:
determining a communication path corresponding to sender information wherein the sender information included in an INVITE signal received from a sender; and
controlling the signaling via the communication path determined by the determining the call control method further comprising the step of:
setting, in a setting information managing table (301), a plurality of usage information items that are used for determining a communication path, and their order of priority,
wherein the INVITE signal includes a plurality of information items on the sender, and
the determining step comprising the steps of:
receiving the INVITE signal,
referring to the setting information managing table (301),
acquiring usage information with the first order of priority out of said plurality of usage information items set in the setting information managing table (301), wherein said acquired usage information item corresponds to an information item on the sender that exists in the INVITE signal, and
determining the communication path based on the acquired usage information item.

10. A call control program for determining a communication path of signaling between a sender and a receiver, enabling a computer to execute:
a determining process for determining a communication path corresponding to sender information included in an INVITE signal received from a sender,
a control process for controlling the signaling via the communication path determined by the determining process; and
a setting process for setting, in a setting information managing table (301), a plurality of usage information items that are used for determining a communication path, and their order of priority,
wherein the INVITE signal includes a plurality of information items on the sender, and
the determining process comprising the processes of:
receiving the INVITE signal,
referring to the setting information managing table (301),
acquiring usage information with the first order of priority out of said plurality of usage information items set in the setting information managing table (301), wherein said acquired usage information item corresponds to an information item on the sender that exists in the INVITE signal, and
determining the communication path based on the acquired usage information item.

## Patentansprüche

1. Rufsteuerungsvorrichtung zum Bestimmen eines Signalisierungskommunikationspfades zwischen einem Sender und einem Empfänger, mit:
einer Bestimmungseinrichtung (4) zum Bestimmen eines Kommunikationspfades, der Information über den Sender entspricht, wobei die Information über den Sender in einem vom Sender empfangenen INVITE-Signal enthalten ist; und
einer Steuereinrichtung (5) zum Steuern der Signalisierung über den durch die Bestimmungseinrichtung bestimmten Kommunikationspfad,
wobei die Rufsteuerungsvorrichtung ferner aufweist:
eine Setzeinrichtung (300) zum Setzen mehrerer Nutzungsinformationselemente, die zum Bestimmen eines Kommunikationspfades verwendet werden, und ihrer Prioritätsfolge in einer Setzinformationsverwaltungstabelle (301),
wobei das INVITE-Signal mehrere Informationselemente über den Sender enthält, und
wobei die Bestimmungseinrichtung (4) dazu geeignet ist, wenn sie das INVITE-Signal empfängt:
auf die Setzinformationsverwaltungstabelle (301) Bezug zu nehmen,
Nutzungsinformation mit der höchsten Priorität aus den mehreren in der Setzinformationsverwaltungstabelle (301) gesetzten Nutzungsinformationselementen abzurufen, wobei das abgerufene Nutzungsinformationselement einem im INVITE-Signal vorhandenen Informationselement über den Sender entspricht, und
den Kommunikationspfad basierend auf dem abgerufenen Nutzungsinformationselement zu bestimmen.

2. Rufsteuerungsvorrichtung nach Anspruch 1,
wobei die Bestimmungseinrichtung eine Kommunikationsbestimmungseinrichtung zum Bestimmen eines Kommunikationspfades aufweist, der der Information über den Sender und Information über den Empfänger entspricht, die beide im INVITE-Signal enthalten sind.

3. Rufsteuerungsvorrichtung nach Anspruch 1 oder 2,
wobei die Rufsteuerungsvorrichtung ferner eine Regelverwaltungseinrichtung (35) zum Verwalten von Regelinformation, die ein bestimmender Faktor zum Bestimmen des Kommunikationspfades ist, in Zuordnung zu einem Suchschlüssel aufweist, der aus der Information über den Sender zusammengestellt ist, und
wobei die Bestimmungseinrichtung die Regelverwaltungseinrichtung unter Verwendung der abgerufenen Information als ein Suchschlüssel durchsucht, und wobei die Bestimmungseinrichtung, falls ein der abgerufenen Information entsprechender Suchschlüssel in der Regelverwaltungseinrichtung nicht vorhanden ist, die Regelverwaltungseinrichtung unter Verwendung der abgerufenen Information als ein Suchschlüssel durchsucht, von der die abgerufene Information in der umgekehrten Prioritätsfolge gelöscht wird, und wobei die Bestimmungseinrichtung, falls ein der abgerufenen Information entsprechender Suchschlüssel in der Regelverwaltungseinrichtung vorhanden ist, die Regelinformation, wobei die Regelinformation mit dem Suchschlüssel verknüpft ist, von der Regelverwaltungseinrichtung abruft und einen der abgerufenen Regelinformation entsprechenden Kommunikationspfad bestimmt.

4. Rufsteuerungsvorrichtung nach Anspruch 3,
wobei die Rufsteuerungsvorrichtung ferner eine Pfadverwaltungseinrichtung (36) zum Identifizieren des Kommunikationspfades in Verknüpfung mit einem Suchschlüssel aufweist, der aus der Regelinformation und der Information über den Empfänger zusammengestellt ist, und
wobei die Bestimmungseinrichtung unter Verwendung der Regelinformation und der Information über den Empfänger als ein Suchschlüssel auf die Pfadverwaltungseinrichtung Bezug nimmt, und wobei die Bestimmungseinrichtung, falls ein der Regelinformation und der Information über den Empfänger entsprechender Suchschlüssel in der Pfadverwaltungseinrichtung vorhanden ist, einen mit dem Suchschlüssel verknüpften Kommunikationspfad von der Pfadverwaltungseinrichtung abruft und den Kommunikationspfad bestimmt.

5. Rufsteuerungsvorrichtung nach Anspruch 4, wobei die Bestimmungseinrichtung, falls ein der Regelinformation und der Information über den Empfänger entsprechender Suchschlüssel nicht in der Pfadverwaltungseinrichtung vorhanden ist, aber ein der Information über den Empfänger entsprechender Suchschlüssel in der Pfadverwaltungseinrichtung vorhanden ist, die Information über einen Kommunikationspfad, der mit dem Suchschlüssel verknüpft ist, von der Pfadverwaltungseinrichtung abruft und den Kommunikationspfad bestimmt.

6. Rufsteuerungsvorrichtung nach einem der Ansprüche 1 bis 5,
wobei die Bestimmungseinrichtung ferner eine Dienstbestimmungseinrichtung zum Bestimmen eines der Information über den Sender entsprechenden Dienstes aufweist, und
wobei die Steuereinrichtung eine Steuerung derart ausführt, dass für den Sender ein durch die Bestimmungseinrichtung bestimmter Dienst bereitgestellt wird.

7. Rufsteuerungsvorrichtung nach einem der Ansprüche 1 bis 6,
wobei die Rufsteuerungsvorrichtung ferner eine Ausführungsmöglichkeitsverwaltungseinrichtung zum Verwalten von Ausführungsmöglichkeitsinformation aufweist, wobei die Ausführungsmöglichkeitsinformation bestimmt, ob die Bestimmungseinrichtung die Bestimmung ausführen sollte oder nicht, und einen Kommunikationspfad, der verwendet wird, wenn die Bestimmung nicht ausgeführt wird, in Verknüpfung mit Information über einen Empfänger, und
wobei die Bestimmungseinrichtung basierend auf der im INVITE-Signal enthaltenen Information über den Empfänger auf die Ausführungsmöglichkeitsverwaltungseinrichtung Bezug nimmt, wobei, falls die mit der Information über den Empfänger verknüpfte Ausführungsmöglichkeitsinformation Information ist, die anzeigt, dass eine Ausführung der Bestimmung möglich ist, die Bestimmungseinrichtung die Bestimmung ausführt, und falls die Ausführungsmöglichkeitsinformation Information ist, die anzeigt, dass eine Ausführung der Bestimmungsverarbeitung unmöglich ist, die Bestimmungseinrichtung die Bestimmung nicht ausführt, und
wobei, wenn die Bestimmungseinrichtung die Bestimmung nicht ausführt, die Steuereinrichtung die Signalisierung über einen Kommunikationspfad steuert, wobei die Information in der Ausführungsmöglichkeitsverwaltungseinrichtung in Verknüpfung mit der Information über den Empfänger verwaltet wird.

8. Rufsteuerungssystem zum Bestimmen eines Signalisierungskommunikationspfades zwischen einem Sender-Endgerät und einem Empfänger-Endgerät, wobei das System mindestens ein Sender-Endgerät, ein Empfänger-Endgerät und eine Rufsteuerungsvorrichtung aufweist,
wobei die Rufsteuerungsvorrichtung einen Signalisierungskommunikationspfad für eine zwischen dem Sender-Endgerät und dem Empfänger-Endgerät ausgeführte Signalisierung bestimmt,
wobei die Rufsteuerungsvorrichtung aufweist:
eine Bestimmungseinrichtung (4) zum Bestimmen eines Kommunikationspfades, der Senderinformation entspricht, wobei die Senderinformation in einem von einem Sender-Endgerät empfangenen INVITE-Signal enthalten ist, und eine Steuereinrichtung (5) zum Steuern der Signalisierung über den durch die Bestimmungseinrichtung bestimmten Kommunikationspfad,
wobei die Rufsteuerungsvorrichtung ferner aufweist:
eine Setzeinrichtung (300) zum Setzen mehrerer Nutzungsinformationselemente, die zum Bestimmen eines Kommunikationspfades verwendet werden, und ihrer Prioritätsfolge in einer Setzinformationsverwaltungstabelle (301),
wobei das INVITE-Signal mehrere Informationselemente über das Sender-Endgerät enthält, und
wobei die Bestimmungseinrichtung (4) dazu geeignet ist, wenn sie das INVITE-Signal empfängt:
auf die Setzinformationsverwaltungstabelle (301) Bezug zu nehmen,
Nutzungsinformation mit der höchsten Priorität aus den mehreren in der Setzinformationsverwaltungstabelle (301) gesetzten Nutzungsinformationselementen abzurufen, wobei das abgerufene Nutzungsinformationselement einem im INVITE-Signal vorhandenen Informationselement über das Sender-Endgerät entspricht, und
den Kommunikationspfad basierend auf dem abgerufenen Nutzungsinformationselement zu bestimmen.

9. Rufsteuerungsverfahren zum Bestimmen eines Signalisierungskommunikationspfades zwischen einem Sender und einem Empfänger, mit den Schritten:
Bestimmen eines Senderinformation entsprechenden Kommunikationspfades, wobei die Senderinformation in einem von einem Sender empfangenen INVITE-Signal enthalten ist; und
Steuern der Signalisierung über den durch den Bestimmungsschritt bestimmten Kommunikationspfad,
wobei das Rufsteuerungsverfahren ferner den Schritt aufweist:
Setzen mehrerer Nutzungsinformationselemente, die zum Bestimmen eines Kommunikationspfades verwendet werden, und ihrer Prioritätsfolge in einer Setzinformationsverwaltungstabelle (301),
wobei das INVITE-Signal mehrere Informationselemente über den Sender enthält, und
wobei der Bestimmungsschritt die Schritte aufweist:
Empfangen des INVITE-Signals;
Bezugnahme auf die Setzinformationsverwaltungstabelle (301);
Abrufen von Nutzungsinformation mit der höchsten Priorität von den in der Setzinformationsverwaltungstabelle (301) gesetzten mehreren Nutzungsinformationselementen, wobei das abgerufene Nutzungsinformationselement einem im INVITE-Signal vorhandenen Informationselement über den Sender entspricht; und
Bestimmen des Kommunikationspfades basierend auf dem abgerufenen Nutzungsinformationselement.

10. Rufsteuerungsprogramm zum Bestimmen eines Signalisierungskommunikationspfades zwischen einem Sender und einem Empfänger, wobei das Programm einem Computer ermöglicht, die folgenden Verarbeitungen auszuführen:
eine Bestimmungsverarbeitung zum Bestimmen eines Kommunikationspfades, der Senderinformation entspricht, die in einem von einem Sender empfangenen INVITE-Signal enthalten ist; und
eine Steuerverarbeitung zum Steuern der Signalisierung über den durch die Bestimmungsverarbeitung bestimmten Kommunikationspfad, und
eine Setzverarbeitung zum Setzen mehrerer Nutzungsinformationselemente, die zum Bestimmen eines Kommunikationspfades verwendet werden, und ihrer Prioritätsfolge in einer Setzinformationsverwaltungstabelle (301),
wobei das INVITE-Signal mehrere Informationselemente über den Sender enthält, und
wobei die Bestimmungsverarbeitung die Schritte aufweist:
Empfangen des INVITE-Signals;
Bezugnahme auf die Setzinformationsverwaltungstabelle (301) ;
Abrufen von Nutzungsinformation mit der höchsten Priorität von den in der Setzinformationsverwaltungstabelle (301) gesetzten mehreren Nutzungsinformationselementen, wobei das abgerufene Nutzungsinformationselement einem im INVITE-Signal vorhandenen Informationselement über den Sender entspricht; und
Bestimmen des Kommunikationspfades basierend auf dem abgerufenen Nutzungsinformationselement.

## Revendications

1. Dispositif de commande d'appel permettant de déterminer un trajet de communication de signalisation entre un émetteur et un récepteur, comprenant :
un moyen de détermination (4) pour la détermination d'un trajet de communication correspondant à l'information sur l'émetteur, ladite information sur l'émetteur étant contenue dans un signal INVITE reçu de l'émetteur ; et
un moyen de commande (5) pour la commande de signalisation via le trajet de communication déterminé par le moyen de détermination,
ledit dispositif de commande d'appel comprenant en outre :
un moyen de définition (300) pour la définition, dans un tableau d'administration (301) d'information de définition, d'une pluralité d'attributs d'information d'utilisation exploités pour déterminer un trajet de communication, et de leur ordre de priorité,
le signal INVITE contenant une pluralité d'attributs d'information sur l'émetteur, et
le moyen de détermination (4) étant prévu, lors de la réception du signal INVITE,
pour se référer au tableau d'administration (301) d'information de définition,
afin d'obtenir une information d'utilisation avec le premier ordre de priorité à partir de la pluralité d'attributs d'information d'utilisation définies dans le tableau d'administration (301) d'information de définition, l'attribut d'information d'utilisation obtenu correspondant à un attribut d'information sur l'émetteur existant dans le signal INVITE, et
afin de déterminer le chemin de communication sur la base de l'attribut d'information d'utilisation obtenu.

2. Dispositif de commande d'appel selon la revendication 1,
où le moyen de détermination comprend un moyen de détermination de communication pour déterminer un trajet de communication correspondant à l'information sur l'émetteur et l'information sur le récepteur, les deux étant contenues dans le signal INVITE.

3. Dispositif de commande d'appel selon la revendication 1 ou la revendication 2,
où ledit dispositif de commande d'appel comprend en outre un moyen d'administration stratégique (35) pour administrer l'information stratégique, déterminante pour définir le trajet de communication, en association avec une clé de recherche composée de l'information sur l'émetteur, et
où le moyen de détermination effectue une recherche dans le moyen d'administration stratégique en recourant à l'information obtenue comme clé de recherche, et, dans le cas où une clé de recherche correspondant à l'information obtenue est inexistante dans le moyen d'administration stratégique, le moyen de détermination effectue une recherche dans le moyen d'administration stratégique en recourant à l'information obtenue comme clé de recherche dont l'information obtenue est effacée dans l'ordre inverse à la priorité, et, dans le cas où une clé de recherche correspondant à l'information obtenue est présente dans le moyen d'administration stratégique, le moyen de détermination obtient du moyen d'administration stratégique l'information stratégique, ladite information stratégique étant associée à la clé de recherche, et détermine un trajet de communication correspondant à l'information stratégique obtenue.

4. Dispositif de commande d'appel selon la revendication 3, où le dispositif de commande d'appel comprend en outre un moyen d'administration de trajet (36) pour administrer le trajet de communication en association avec une clé de recherche, composée de l'information stratégique et de l'information sur le récepteur ; et
où le moyen de détermination se réfère au moyen d'administration de trajet en recourant à l'information stratégique et à l'information sur le récepteur comme clé de recherche, et, dans le cas où une clé de recherche correspondant à l'information stratégique et à l'information sur le récepteur est présente dans le moyen d'administration de trajet, le moyen de détermination obtient du moyen d'administration de trajet un trajet de communication associé à la clé de recherche, et détermine le trajet de communication.

5. Dispositif de commande d'appel selon la revendication 4,
où, dans le cas où une clé de recherche correspondant à l'information stratégique et à l'information sur le récepteur est inexistante dans le moyen d'administration de trajet, mais où une clé de recherche correspondant à l'information sur le récepteur est présentée dans le moyen d'administration de trajet, le moyen de détermination obtient du moyen d'administration de trajet un trajet de communication associé à la clé de recherche, et détermine le trajet de communication.

6. Dispositif de commande d'appel selon l'une des revendications 1 à 5,
où le moyen de détermination comprend en outre un moyen de détermination de service pour déterminer un service correspondant à l'information sur l'émetteur ; et
où le moyen de commande exerce la commande de manière à fournir à l'émetteur un service déterminé par le moyen de détermination.

7. Dispositif de commande d'appel selon l'une des revendications 1 à 6,
où le dispositif de commande d'appel comprend en outre un moyen d'administration de possibilité d'exécution pour administrer une information de possibilité d'exécution, ladite information de possibilité d'exécution déterminant si le moyen de détermination doit exécuter la détermination ou pas, et un trajet de communication utilisé quand la détermination n'est pas exécutée, en association avec l'information sur le récepteur ; et
où le moyen de détermination se réfère au moyen d'administration de possibilité d'exécution sur la base de l'information sur le récepteur contenue dans le signal INVITE, et, dans le cas où l'information de possibilité d'exécution, associée à l'information sur le récepteur, est une information indiquant que l'exécution est possible, le moyen de détermination exécute la détermination, et dans le cas où l'information de possibilité d'exécution est une information indiquant l'impossibilité d'exécution, le moyen de détermination n'exécute pas la détermination ; et
où, dans le cas où le moyen de détermination n'exécute pas la détermination, le moyen de commande exerce la commande de signalisation via un trajet de communication, le moyen d'administration de possibilité d'exécution exerçant l'administration en association avec l'information sur le récepteur.

8. Système de commande d'appel permettant de déterminer un trajet de communication de signalisation entre un terminal émetteur et un terminal récepteur, comprenant au moins un terminal émetteur, un terminal récepteur, et un dispositif de commande d'appel :
où le dispositif de commande d'appel détermine un trajet de communication de signalisation exécuté entre le terminal émetteur et le terminal récepteur,
où le dispositif de commande d'appel comprend :
un moyen de détermination (4) pour la détermination d'un trajet de communication correspondant à l'information sur l'émetteur, ladite information sur l'émetteur étant contenue dans un signal INVITE reçu d'un terminal émetteur, et un moyen de commande (5) pour la commande de signalisation via le trajet de communication déterminé par le moyen de détermination,
ledit dispositif de commande d'appel comprenant en outre :
un moyen de définition (300) pour la définition, dans un tableau d'administration (301) d'information de définition,
d'une pluralité d'attributs d'information d'utilisation exploités pour déterminer un trajet de communication, et de leur ordre de priorité,
le signal INVITE contenant une pluralité d'attributs d'information sur le terminal émetteur, et
le moyen de détermination (4) étant prévu, lors de la réception du signal INVITE,
pour se référer au tableau d'administration (301) d'information de définition,
afin d'obtenir une information d'utilisation avec le premier ordre de priorité à partir de la pluralité d'attributs d'information d'utilisation définies dans le tableau d'administration (301) d'information de définition, l'attribut d'information d'utilisation obtenu correspondant à un attribut d'information sur le terminal émetteur existant dans le signal INVITE, et
afin de déterminer le chemin de communication sur la base de l'attribut d'information d'utilisation obtenu.

9. Procédé de commande d'appel pour la détermination d'un trajet de communication de signalisation entre un émetteur et un récepteur, comprenant les étapes de :
détermination d'un trajet de communication correspondant à une information sur l'émetteur, ladite information sur l'émetteur étant contenue dans un signal INVITE reçu d'un émetteur ; et
commande de la signalisation via le trajet de communication déterminé lors de la détermination,
ledit procédé de commande d'appel comprenant en outre l'étape de :
définition, dans un tableau d'administration (301) d'information de définition, d'une pluralité d'attributs d'information d'utilisation exploités pour déterminer un trajet de communication, et de leur ordre de priorité,
le signal INVITE contenant une pluralité d'attributs d'information sur l'émetteur, et
l'étape de détermination (4) comprenant les étapes de :
réception du signal INVITE,
référence au tableau d'administration (301) d'information de définition,
obtention d'une information d'utilisation avec le premier ordre de priorité à partir de la pluralité d'attributs d'information d'utilisation définies dans le tableau d'administration (301) d'information de définition,
l'attribut d'information d'utilisation obtenu correspondant à un attribut d'information sur l'émetteur existant dans le signal INVITE, et
détermination du chemin de communication sur la base de l'attribut d'information d'utilisation obtenu.

10. Programme de commande d'appel pour la détermination d'un trajet de communication de signalisation entre un émetteur et un récepteur, permettant à un ordinateur d'exécuter :
un processus de détermination pour déterminer un trajet de communication correspondant à une information sur l'émetteur contenue dans un signal INVITE reçu d'un émetteur, et
un processus de commande pour commander la signalisation via le trajet de communication déterminé par le processus de détermination ;
un processus de définition, pour définir, dans un tableau d'administration (301) d'information de définition, une pluralité d'attributs d'information d'utilisation exploités pour déterminer un trajet de communication, et leur ordre de priorité,
le signal INVITE contenant une pluralité d'attributs d'information sur l'émetteur, et
le processus de détermination comprenant les processus de :
réception du signal INVITE,
référence au tableau d'administration (301) d'information de définition,
obtention d'une information d'utilisation avec le premier ordre de priorité à partir de la pluralité d'attributs d'information d'utilisation définies dans le tableau d'administration (301) d'information de définition, l'attribut d'information d'utilisation obtenu correspondant à un attribut d'information sur l'émetteur existant dans le signal INVITE, et
détermination du chemin de communication sur la base de l'attribut d'information d'utilisation obtenu.
